# EUROPÄISCHE PATENTSCHRIFT

(11) **EP 2 035 738 B1**
(45) Veröffentlichungstag und Bekanntmachung des Hinweises auf die Patenterteilung: **07.05.2014**
(21) Anmeldenummer: 07730177.8
(22) Anmeldetag: 15.06.2007
(51) Int. Cl.: F16L 59/065, F25D 23/06

(54) **WÄRMEDÄMMELEMENTE**
THERMAL INSULATION ELEMENTS
ÉLÉMENTS D'ISOLATION THERMIQUE

(30) Priorität: 22.06.2006 EP 06115907
(43) Veröffentlichungstag der Anmeldung: 18.03.2009
(73) Patentinhaber: BASF SE, 67056 Ludwigshafen (DE)
(72) Erfinder: MATZKE, Günter, 49356 Diepholz (DE); WIEGMANN, Werner, 32369 Rahden-Wehe (DE)
(86) Internationale Anmeldenummer: PCT/EP2007/055933
(87) Internationale Veröffentlichungsnummer: WO 2007/147779

(56) Entgegenhaltungen:
- EP-A- 0 220 506
- EP-A- 0 715 138
- EP-A- 1 143 214
- DE-A1- 19 858 121
- US-A- 2 768 046
- US-A- 4 529 638
- US-A- 4 681 788
- US-A- 5 018 328
- US-A- 5 252 408
- US-A- 5 284 692

## Beschreibung

Gegenstand der Erfindung sind Wärmedämmelemente, die Vakuumisolationspaneele enthalten, aus diesen Wärmedämmelementen hergestellte Kältegeräte sowie ein Verfahren zur Herstellung der Wärmedämmelemente sowie daraus hergestellte Kältegeräte.

Kältegeräte spielen in vielen Gebieten eine große Rolle. Zu den Kältegeräten gehören beispielsweise Kühlschränke, Gefriertruhen, Gefrierschränke, Kühlcontainer oder Aufbauten von Kühlfahrzeugen. Üblicherweise bestehen die Kältegeräte aus einem von Wärmedämmelementen umgebenen Hohlraum, in dem sich das zu kühlende Gut befindet. Die Wärmedämmelemente bestehen üblicherweise aus zwei Deckschichten, zwischen denen sich ein Wärmedämmmaterial, zumeist ein Polyurethan-Hartschaumstoff, befindet.

Es ist eine ständige Forderung, den Energieverbrauch der Kältegeräte zu verringern. Eine Möglichkeit besteht in der Verringerung der Wärmeleitfähigkeit der eingesetzten Wärmedämmmaterialien. Eine Möglichkeit dazu ist der Einsatz von sogenannten Vakuumisolationspaneelen, im folgenden auch als VIP bezeichnet.

So liegt das Energieeinsparpotential beim Einsatz von VIP gegenüber konventionellen, geschlossenzelligen Polyurethan-Hartschaumstoffen bei etwa 10 - 40 %.

Solche Vakuumisolationseinheiten bestehen in der Regel aus einem wärmeisolierenden Kernmaterial, beispielsweise offenzelligem Polyurethan (PUR)-Hartschaumstoff, offenzelligem extrudiertem Polystyrolschaumstoff, Kieselgelen, Glasfasern, Kunststoffschüttungen, gepresstem Mahlgut aus PUR-Hartschaumstoff bzw. - Halbhartschaumstoff oder Perlite, welches in eine gasdichte Folie verpackt, evakuiert und luftdicht eingeschweißt wird.

Der Einsatz von VIP in Kältegeräten ist bekannt und häufig beschrieben. So beschreibt WO 97/36129 VIP mit einem Kantenlänge von mindestens 40 cm, die in Kältegeräte eingebaut werden können.

In EP 434 225 werden VIP sowie deren Einbau in Kältegeräte beschrieben. Dabei wird das VIP zwischen die Deckschichten angeordnet und umschäumt.

In WO 99/61503 werden VIP beschrieben, die in Kältegeräte eingebaut werden. Dabei werden sie an der zum Innenraum des Kältegerätes befindlichen Seite mit einem Kleber fixiert und danach der Hohlraum zwischen den Deckschichten mit Polyurethan-Hartschaumsystem ausgeschäumt.

Eine weitere ständige Forderung besteht in der Reduzierung des Materialeinsatzes bei der Herstellung der Kältegeräte. Durch die Verwendung der VIP kann durch deren geringere Wärmeleitfähigkeit bereits eine Verringerung der Dämmdicke der Kältegeräte erreicht werden. Damit ist bei gleichen Abmessungen des Kältegerätes eine Vergrößerung des Innenraums und damit des Nutzvolumens der Kältegeräte möglich.

Eine weitere Einsparung könnte durch die Verringerung der Dicke der Deckschichten erreicht werden. Dies ist allerdings nur begrenzt möglich.

Bei Ausschäumung der Hohlräume der Kältegeräte mit Polyurethan-Hartschaumsystemen kommt es üblicherweise zur Ausbildung von Fehlstellen und Lunkern. Bei einer zu geringen Dicke der Deckschichten bilden sich diese Fehlstellen auf der Außenseite ab. Dies beeinträchtigt die Ästhetik der Kältegeräte und wird als Nachteil angesehen.

Das Dokument EP 0 715 138 offenbart ein bekantes Wärmedämmelement.

Es war die Aufgabe der vorliegenden Erfindung, Kältegeräte effizient herzustellen, die einen geringen Energieverbrauch und eine hohe Qualität/einwandfreies Aussehen aufweisen, einfach herzustellen und problemlos zu recyceln sind.

Diese Aufgabe konnte gelöst werden durch die unten näher beschriebenen Wärmedämmelemente, mit denen Kältegeräte hergestellt werden können.

Die Aufgabe konnte gelöst werden durch Wärmedämmelemente, bestehend aus
a) einer Deckschicht mit einer Dicke von 0,2 bis 1,0 mm
b) mindestens einem an a) befindlichen Vakuumisolationspaneel,
c) einem weiteren Wärmedämmmaterial,
d) einer weiteren Deckschicht, wobei das Vakuumisolationspaneel b) durch Kleber oder Klebebänder an der Deckschicht a) befestigt ist, gemäß Anspruch 1.

Die Deckschicht a) kann aus Metall, beispielsweise aus Stahlblech, bestehen. In einer anderen Ausführungsform der erfindungsgemäßen Wärmedämmelemente besteht die Deckschicht a) aus Kunststoffen, insbesondere thermoplastischen Kunststoffen. Vorzugsweise werden als Kunststoffe Polystyrol oder ABS-Kunststoffe eingesetzt. Wie beschrieben, haben die Metall-Deckschichten eine Dicke von 0,2 bis 0,5 mm, bevorzugt von mindestens 0,25 und insbesondere von 0,3 und von höchstens 0,4 mm. Bei Kunststoff wird eine Dicke von 0,7 -1,0 mm bevorzugt.

Vorzugsweise ist mindestens 60 %, besonders bevorzugt mindestens 70 % und insbesondere mindestens 80 % der Fläche der Deckschicht a) mit dem Vakuumisolationspaneel bedeckt. Eine vollständige Bedeckung der Deckschicht a) ist möglich, jedoch nicht bevorzugt, da aus Gründen der Stabilität der aus den Wärmedämmelementen hergestellten Kältegeräte eine Ausschäumung der Ecken vorgenommen werden sollte. Außerdem kann nicht sichergestellt werden, dass sich bei der Herstellung der Kältegeräte an den Ecken beziehungsweise Kanten Bereiche herausbilden, an denen die Vakuumisolationspaneele zusammenstoßen und Hohlräume ausbilden, die auch vom weiteren Dämmmaterial c) nicht ausgefüllt werden können.

Die Deckschicht a) kann von mehreren, bevorzugt jedoch von nur einem Vakuumisolationspaneel bedeckt sein. Dabei haben die Vakuumisolationspaneele bevorzugt eine Kantenlänge von mindestens 40 cm, vorzugsweise bei 60±20 cm x 160±40 cm und eine Dicke von mindestens 5 mm und maximal 50 mm. Vorzugsweise richtet sich die Größe der Vakuumisolationspaneele nach der Größe der Kältegeräte und sollte, wie beschrieben, so bemessen sein, dass mit nur einem Vakuumisolationspaneel mindestens 60 % der Deckschicht a) bedeckt ist.
Der Vorteil der Verwendung nur eines Vakuumisolationspaneels b) pro Wärmedämmelement liegt insbesondere darin, dass durch die lückenlose Bedeckung der Deckschicht a) die Wasserdampfdiffusion und die Wärmeleitfähigkeit verschlechtert werden können und eventuelle Lücken, die an der Grenze zwischen zwei Vakuumisolationspaneelen an der Außenhaut auftreten können, vermieden werden. Auf Grund der Größe kann diese Ausführungsform insbesondere bei der Verwendung der Wärmedämmelemente zur Herstellung von Kühlschränken oder Gefriertruhen eingesetzt werden.

Die Herstellung der Vakuumisolationspaneele und die dazu verwendbaren Materialien sind bekannt. Als Kernmaterialien werden, wie beschrieben, bevorzugt offenzellige Polyurethan-Hartschaumstoffe oder geschäumte Melamin-Formaldehyd-Kondensationsprodukte eingesetzt.

Ein Verfahren zur Herstellung der geschäumten Melamin-Formaldehyd-Kondensationsprodukte ist beispielsweise beschrieben in EP 220 506.

Die geschäumten Melamin-Formaldehyd-Kondensationsprodukte können bis 50 Gew.-% einkondensierte andere Duroplastbildner enthalten. Dabei handelt es sich bevorzugt um Kondensationsprodukte von Amin-, Amid-, Hydroxyl-, und/oder Caboxylgruppen enthaltende Verbindungen mit Aldehyden, insbesondere Formaldehyd. Bevorzugte Duroplastbildner sind Kondensationsprodukte von substituiertem Melamin, Harnstoff, Urethanen, aliphatischen Aminen, Aminoalkoholen, Phenolen und deren Derivaten mit Aldehyden. Als Aldehyde können im Gemisch mit oder an Stelle von Formaldehyd weitere Aldehyde wie Acetaldehyd, Benzaldehyd, Acrolein, Terephthalaldehyd eingesetzt werden.

Darüber hinaus können die geschäumten Melamin-Formaldehyd-Kondensationsprodukte noch Zusatzstoffe wie organische oder anorganische Füllstoffe enthalten. Als Zusatzstoffe können Fasern, anorganische Pulver wie Metallpulver, Kaolin, Quarz, Kreide, ferner Farbstoffe und Pigmente eingesetzt werden.

Da die geschäumten Melamin-Formaldehyd-Kondensationsprodukte nur Zellstege und keine Zellwände aufweisen, sind sie sehr leicht zu evakuieren. Bevorzugt werden hart eingestellte Melamin-Formaldehyd-Kondensationsprodukte verwendet.

Geschäumte Melamin-Formaldehyd-Kondensationsprodukte sind bekannt und werden beispielsweise von der BASF AG unter der Bezeichnung Basotect^{®} vertrieben. Ihre Herstellung erfolgt zumeist, indem ein pulverförmiges Melamin-Formaldehyd-Kondensationsprodukt in Wasser, das Salze oder Tenside enthält, angelöst wird, das so erhaltene pastenförmige Zwischenprodukt mit einem Treibmittel gemischt, vorzugweise in einem Extruder, und das so erhaltene Produkt durch Erwärmung aufgeschäumt wird, beispielsweise in einem Heißluftofen. Der Schaum kann anschließend in einer Tempervorrichtung getempert werden. Die Verschäumung erfolgt vorzugsweise in einem Temperaturbereich zwischen 120 und 180°C, die Temperung in einem Temperaturbereich zwischen 200 und 250°C.

Geeignete Polyurethan-Hartschaumstoffe werden beispielsweise in EP 1512707 beschrieben. Bei der Herstellung der offenzelligen Polyurethan-Hartschaumstoffe werden als Treibmittel vorzugsweise Wasser und/oder Kohlenwasserstoffe eingesetzt.

In einer speziellen Ausführungsform der Erfindung werden als Kernmaterial der Vakuumisolationspaneele offenzellige Schaumstoffe auf Isocyanatbasis mit einer Zellgröße von kleiner 100 µm eingesetzt. Derartige Schaumstoffe können über Aerogele gewonnen werden.

Bei der Herstellung der Vakuumisolationspaneele unter Verwendung Polyurethan-Hartschaumstoffe wird zunächst in an sich bekannter Weise der Schaum hergestellt. Danach werden die erhaltenen Schaumstoffe, sofern sie nicht bereits als Formkörper mit der gewünschten Größe hergestellt wurden, in die Form gebracht, die sie als Kern des Vakuum-Isolationspaneels haben. Dies geschieht vorzugsweise durch sägen in entsprechende Plattengröße. Die Formkörper werden danach in die gasdichte Umhüllung, vorzugsweise die Verbund-Folie, verpackt, evakuiert und gasdicht verschweißt.

Es ist üblich, gemeinsam mit dem Kernmaterial auch ein Gettermaterial mit einzuschweißen, um zu verhindern, dass später ausgasende flüchtige Substanzen das Vakuum beeinträchtigen. Als Gettermaterialien können beispielsweise Zeolithe, Aktivkohle, stark hygroskopische Materialien eingesetzt werden.

Als Hüllmaterial für die Vakuumisolationspaneele verwendet man im allgemeinen eine Folie. Bevorzugte Folien sind Verbundfolien, insbesondere Mehrschichtverbundfolien mit einer aufgedampften oder auflaminierten Metallschicht, beispielsweise aus Aluminium. Geeignete Folien bestehen z. B. aus Polyester, Polyvinylchlorid, Polyolefinen wie Polyethylen oder Polypropylen, oder Polyvinylalkohol.

Die Verwendung von offenzelligen Polyurethan-Hartschaumstoffen als Kernmaterial für die Vakuumisolationspaneel ist, wie beschrieben bevorzugt. Die Vorteile liegen zum einen darin, dass so hergestellte Kältegeräte komplett recycelbar sind, da keine systemfremden Bestandteile im Kältegerät enthalten sind. Zum anderen sind die Platten bei der Herstellung der Vakuumisolationspaneele auch besser handhabbar als pulverförmige Stoffe.

Wie beschrieben, werden die erfindungsgemäßen Wärmedämmelemente überwiegend zur Herstellung von Kältegeräten eingesetzt. Kältegeräte sind beispielsweise Kühlschränke, Gefriertruhen, Gefrierschränke, Kühlcontainer oder Aufbauten für Kühlfahrzeuge. Die erfindungsgemäßen Wärmedämmelemente können dabei sowohl als Wand- als auch als Türelemente eingesetzt werden.

Dabei kann die Herstellung der Kältegeräte auf unterschiedlichem Wege erfolgen.

In einer Ausführungsform der Herstellung der Kältegeräte werden die Wärmedämmelemente separat als flächige Elemente hergestellt und danach zu den Kältegeräten zusammengefügt. Diese Ausführungsform ist insbesondere bei sehr großen Kältegeräten bevorzugt, beispielsweise Kühlcontainern oder Aufbauten für Kühlfahrzeuge. Dabei können die Deckschichten a) und d) im gewünschten Abstand fixiert und das Dämmmaterial c) eingebracht werden. Als Dämmmaterial c) wird insbesondere Polyurethan-Hartschaumstoff eingesetzt, dessen flüssige Ausgangskomponenten in den Hohlraum eingebracht werden, wo sie zum Polyurethan aushärten und gleichzeitig die Deckschichten a) und d) fest miteinander verbinden.

Es ist prinzipiell auch möglich, die Wärmedämmelemente nach dem Doppelplattenbandverfahren herzustellen. Dazu werden auf die bewegte untere Deckschicht a) die Vakuumisolationspaneele b) aufgebracht, darauf die flüssigen Ausgangskomponenten für den Polyurethan-Hartschaumstoff und danach die obere Deckschicht d) aufgebracht. Das erhaltene Wärmedämmelement kann dann je nach der Länge der eingebrachten Vakuumisolationspaneele b) zwischen den Vakuumisolationspaneelen b) abgelängt werden.

Bei der Herstellung von Kühlschränken oder Gefriertruhen ist es bevorzugt, die äußere Deckschicht a) und die innere Deckschicht d) zu dem Gehäuse des Geräts zu verformen und in den Hohlraum zwischen den Deckschichten die flüssigen Ausgangskomponenten des als Dämmmaterial eingesetzten Polyurethan-Hartschaumstoffs einzubringen. Durch den Polyurethan-Hartschaumstoff werden die Deckschichten fest verbunden und das Gehäuse somit stabilisiert.

In einer Ausführungsform der Kühlschränke werden für die Rückseite, wo ästhetische Aspekte naturgemäß keine überragende Rolle spielen, Dämmelemente eingesetzt, bei denen die Deckschicht a) aus Pappe oder Polyolefin, wie Polyethylen oder Polypropylen, bestehen. Ansonsten haben diese Wärmedämmelenente den gleichen Aufbau wie oben beschrieben.

In einer weiteren Ausführungsform der Herstellung der Kältegeräte können, wie oben beschrieben, auf einer Doppelplattenbandanlage die Wärmedämmelemente hergestellt und, wie in EP 1 075 634 beschrieben, abgelängt, auf Gehrung geschnitten und zum Gehäuse des Kältegerätes gefaltet werden. Dabei ist zu beachten, dass die eingebrachten Vakuumisolationspaneele b) nicht beschädigt werden.

Bei den als Dämmstoff c) vorzugsweise eingesetzten Polyurethan-Hartschaumstoffen handelt es sich vorzugsweise um die üblichen und bekannten Verbindungen, wie sie beispielsweise im Kunststoff-Handbuch, Band 7 "Polyurethane", 3. Auflage 1993, Carl Hanser Verlag, München, Wien. Die Herstellung dieser Verbindungen erfolgt üblicherweise durch Umsetzung von Polyisocyanaten, vorzugsweise Dipenylmethan-Diisocyanat und Gemischen aus Diphenylmethan-Diisocyanat mit Polyphenylen-Polymethylen-Polyisocyanaten, auch als Roh-MDI bezeichnet, mit Verbindungen mit mindestens zwei mit Isocyanatgruppen reaktiven Wasserstoffatomen. Bei den Verbindungen mit mindestens zwei mit Isocyanatgruppen reaktiven Wasserstoffatomen handelt es sich zumeist um Polyetheralkohole und/oder Polyesteralkohole, vorzugsweise solchen mit einer Funktionalität von mindestens 3. Bei den Polyesteralkoholen handelt es sich zumeist um Umsetzungsprodukte von mehrfunktionellen Carbonsäuren mit mehrfunktionellen Alkoholen. Bei den Polyetheralkoholen handelt es sich zumeist um Umsetzungsprodukte von Verbindungen mit mindestens 3 aktiven Wasserstoffatomen mit Alkylenoxiden, vorzugsweise Ethylenoxid und/oder Propylenoxid. Als Verbindungen mit mindestens 3 aktiven Wasserstoffatomen werden zumeist mehrfunktionelle Alkohole, wie Glyzerin, Trimethylolpropan, oder Zuckeralkohole, vorzugsweise Saccharose oder Sorbit, aliphatische Amine, wie Ethylendiamin, oder aromatische Amine, wie Toluylendiamin (TDA) oder Diphenylmethandiamin (MDA), zumeist im Gemisch mit seinen höheren Homologen.

Die Umsetzung läuft üblicherweise in Anwesenheit von Katalysatoren, Treibmitteln sowie Hilfs- und/oder Zusatzstoffen statt. Als Treibmittel wird üblicherweise Wasser, zumeist in Kombination mit inerten, bei Raumtemperatur flüssigen Verbindungen, die bei der Reaktionstemperatur der Polyurethanbildung verdampfen, sogenannte physikalische Treibmittel, verwendet. Übliche physikalische Treibmittel sind Alkane, Fluoralkane und Methylformiat. Unter den Alkanen haben die Pentane, und hier besonders das Cyclopentan, die größte technische Bedeutung.

Bei den als Kernmaterial für die Vakuumisolationspaneele eingesetzten Polyurethan-Hartschaumstoffen werden prinzipiell die gleichen Ausgangsstoffe eingesetzt wie zur Herstellung der als Dämmstoffe c) eingesetzten Polyurethane. Es werden jedoch als Treibmittel überwiegend Wasser und Kohlenwasserstoffe, bevorzugt Cyclopentan, eingesetzt.

Die Vorteile der erfindungsgemäßen Wärmedämmelemente liegen gegenüber solchen ohne Vakuumisolationspaneele in der deutlich geringeren Wärmeleitfähigkeit, der geringeren Gasdiffusion und der Möglichkeit, die Dicke der Isolierschicht zu reduzieren und somit Material einzusparen. Überraschenderweise wurde es durch das erfindungsgemäße Verfahren darüber hinaus auch möglich, die Dicke der Deckschicht zu reduzieren, ohne dass es zu Nachteilen bei der Ästhetik der Kältegeräte, der Stabilität und der Gebrauchseigenschaften kommt. Außerdem können die Formverweilzeiten, bedingt durch Verringerung der verbleibenden Isolierschicht c) bei Einsatz von Polyurethan-Hartschaumstoff als c) bei entsprechendem Design um bis zu 50 % reduziert werden. Weiterhin kann durch die Verringerung der Schichtdicke bei gleichen Außenmaßen mehr Nutzraum zur Verfügung gestellt werden.

Bei der Herstellung der erfindungsgemäßen Wärmedämmelemente kann die Temperatur des Werkzeugs bzw. der Form bis auf 23°C abgesenkt werden.

## Patentansprüche

1. Wärmedämmelement, bestehend aus
a) einer Deckschicht mit einer Dicke von 0,2 bis 1,0 mm.
b) mindestens einem an der Deckschicht a) haftend befestigten a) Vakuumisolationspaneel b), wobei das das Vakuumisolationspaneel b) einen Kern aus offenzelligem Polyurethan-Hartschaumstoff enthält, der von einer Folie umhüllt, evakuiert und verschlossen wird, oder das Vakuumisolationspaneel b) einen Kern aus geschäumtem Melamin-Formaldehyd-Kondensationsprodukt enthält,
c) einem Polyurethan-Hartschaumstoff als weiterem Wärmedämmmaterial,
d) einer weiteren Deckschicht.

2. Wärmedämmelement nach Anspruch 1, **dadurch gekennzeichnet, dass** die Deckschicht a) aus Metall besteht.

3. Wärmedämmelement nach Anspruch 1, **dadurch gekennzeichnet, dass** die Deckschicht a) aus einem Kunststoff besteht.

4. Wärmedämmelement nach Anspruch 1, **dadurch gekennzeichnet, dass** das Vakuumisolationspaneel b) mindestens 60 % der Fläche der Deckschicht a) bedeckt.

5. Wärmedämmelement nach Anspruch 1, **dadurch gekennzeichnet, dass** mindestens 70 % der Fläche der Deckschicht a) von einem Vakuumisolationspaneel b) bedeckt.

6. Wärmedämmelement nach Anspruch 1, **dadurch gekennzeichnet, dass** die weitere Deckschicht d) aus einem Metall oder einem Kunststoff besteht.

7. Verwendung der Wärmedämmelemente nach Anspruch 1, als Türelement oder Wandelement für Kältegeräte.

8. Kältegeräte, bestehend aus einem Hohlraum, der von flächenförmigen Wärmedämmelementen umgeben ist, **dadurch gekennzeichnet, dass** mindestens eines der flächenförmigen Wärmedämmelemente ein Wärmedämmelement nach einem der Ansprüche 1 bis 6 ist.

9. Kältegeräte nach Anspruch 7, **dadurch gekennzeichnet, dass** die Wärmedämmelemente so angeordnet sind, dass die Deckschicht a) die Außenfläche des Kältegeräts bildet.

10. Verfahren zur Herstellung von Wärmedämmelementen nach Anspruch 1 bis 6, umfassend die Schritte
ai) Fixierung eines Vakuumisolationspaneels b) auf der Deckschicht a),
bi) Fixierung der Deckschicht d),
ci) Einbringen eines flüssigen Polyurethan-Hartschaumsystems in den in Schritt bi) gebildeten Hohlraum,
di) Aushärten des in Schritt ci) gebildeten Polyurethan-Hartschaumstoffs.

## Claims

1. A thermal insulation element comprising
a) a covering layer having a thickness of from 0.2 to 1.0 mm,
b) at least one vacuum insulation panel b) fastened in an adhesive manner to the covering layer a), where the vacuum insulation panel b) comprises a core of open-celled rigid polyurethane foam which is sheathed by a film, evacuated and closed, or the vacuum insulation panel b) comprises a core of foamed melamine-formaldehyde condensation product,
c) a rigid polyurethane foam as further thermal insulation material,
d) a further covering layer.

2. The thermal insulation element according to claim 1, wherein the covering layer a) comprises metal.

3. The thermal insulation element according to claim 1, wherein the covering layer a) comprises a polymer.

4. The thermal insulation element according to claim 1, wherein the vacuum insulation panel b) covers at least 60% of the area of the covering layer a).

5. The thermal insulation element according to claim 1, wherein at least 70% of the area of the covering layer a) is covered by a vacuum insulation panel b).

6. The thermal insulation element according to claim 1, wherein the further covering layer d) comprises a metal or a polymer.

7. The use of the thermal insulation elements according to claim 1 as door element or wall element for refrigeration appliances.

8. A refrigeration appliance comprising a hollow space which is surrounded by sheet-like thermal insulation elements, wherein at least one of the sheet-like thermal insulation elements is a thermal insulation element according to any of claims 1 to 6.

9. The refrigeration appliance according to claim 7, wherein the thermal insulation elements are arranged so that the covering layer a) forms the outer surface of the refrigeration appliance.

10. A process for producing thermal insulation elements according to any of claims 1 to 6, which comprises the steps
ai) fixing of a vacuum insulation panel b) on the covering layer a),
bi) fixing of the covering layer d),
ci) introduction of a liquid rigid polyurethane foam system into the hollow space formed in step bi),
di) curing of the rigid polyurethane foam formed in step ci).

## Revendications

1. Élément d'isolation thermique, constitué
a) d'une couche de recouvrement ayant une épaisseur de 0,2 à 1,0 mm,
b) d'au moins un panneau d'isolation sous vide b) fixé par adhérence à la couche de recouvrement a), le panneau d'isolation sous vide b) comportant une âme en mousse rigide de polyuréthane à cellules ouvertes, qui est entourée d'un film, dans laquelle a été fait le vide et est fermée, ou le panneau d'isolation sous vide b) comportant une âme à base d'un produit de condensation mélamine-formaldéhyde transformé en mousse,
c) d'une mousse rigide de polyuréthane en tant que matériau d'isolation thermique supplémentaire,
d) d'une autre couche de recouvrement.

2. Élément d'isolation thermique selon la revendication 1, **caractérisé en ce que** la couche de recouvrement a) consiste en métal.

3. Élément d'isolation thermique selon la revendication 1, **caractérisé en ce que** la couche de recouvrement a) consiste en une matière plastique.

4. Élément d'isolation thermique selon la revendication 1, **caractérisé en ce que** le panneau d'isolation sous vide b) couvre au moins 60 % de la surface de la couche de recouvrement a).

5. Élément d'isolation thermique selon la revendication 1, **caractérisé en ce qu'**au moins 70 % de la surface de la couche de recouvrement a) sont recouverts par un panneau d'isolation sous vide b).

6. Élément d'isolation thermique selon la revendication 1, **caractérisé en ce que** l'autre couche de recouvrement d) est constituée d'un métal ou d'une matière plastique.

7. Utilisation de l'élément d'isolation thermique selon la revendication 1, en tant qu'élément de porte ou élément de paroi pour appareils frigorifiques.

8. Appareils frigorifiques, constitués d'un espace vide qui est entouré d'éléments d'isolation thermique de forme plane, **caractérisés en ce qu'**au moins l'un des éléments d'isolation thermique de forme plane est un élément d'isolation thermique selon l'une quelconque des revendications 1 à 6.

9. Appareils frigorifiques selon la revendication 7, **caractérisés en ce que** les éléments d'isolation thermique sont disposés d'une façon telle que la couche de recouvrement a) constitue la face externe de l'appareil frigorifique.

10. Procédé pour la fabrication d'éléments d'isolation thermique selon l'une quelconque des revendications 1 à 6, comprenant les étapes
ai) fixation d'un panneau d'isolation sous vide b) sur la couche de recouvrement a),
bi) fixation de la couche de recouvrement d),
ci) introduction d'un système liquide de mousse rigide de polyuréthane dans l'espace vide formé dans l'étape bi),
di) durcissement de la mousse rigide de polyuréthane formée dans l'étape ci).
